# EUROPEAN PATENT APPLICATION

(11) **EP 4 056 342 A1**
(43) Date of publication of application: **14.09.2022**
(21) Application number: 22161026.4
(22) Date of filing: 09.03.2022
(51) Int. Cl.: B28B 11/04, B28B 11/24, B28B 1/52, C04B 41/45, C04B 41/47, C04B 28/02, E04C 2/06

(54) **METHOD OF MANUFACTURING AUTOCLAVED UNPAINTED THROUGH-COLOURED FIBRE CEMENT SHEETS AND THUS MANUFACTURED FIBRE CEMENT SHEETS**

(30) Priority: 09.03.2021 DK PA202170103
(71) Applicant: CEMBRIT HOLDING A/S, 9000 Aalborg (DK)
(72) Inventor: POULSEN, Carsten Borum, 9000 Aalborg (DK); NICOLAJSEN, Lars, 9000 Aalborg (DK); VIG, Peter Hessellund Møller, 9000 Aalborg (DK)
(74) Representative: Guardian IP Consulting I/S

(57) **Abstract**

A method of manufacturing unpainted through-coloured fibre cement sheets comprising the steps of: a) producing a plurality of through-coloured green sheets (54); b) applying an anti-sticking agent to an outer surface of each of the green sheets (54) in a uniform and controlled manner, e.g. with a spray nozzle (50); c) forming a stack of green sheets (54) with the anti-sticking agent on the outer surface of each sheet; d) putting the stack of green sheets (54) in an autoclave; e) waiting until the sheets (54) are cured to a desired level; and f) removing the sheets (54) from the autoclave. By applying the anti-sticking agent in a controlled and uniform manner on the outwards facing surface of the sheets (54), the efflorescence can be controlled in a uniform manner and the traditional step of sanding can be avoided. In this way, potential gloss differences are reduced.

## Description

The current invention relates to a method of manufacturing autoclaved unpainted through-coloured fibre cement sheets. It should be noted that unpainted through-coloured fibre cement sheets are often used in buildings as facade cladding and as such are designed to have a well-defined surface finish. This is in contrast to non through-coloured fibre cement sheets where the surface finish is of lesser importance. Likewise, some fibre cement sheets are designed to be painted in which case the surface finish of the unpainted sheet is of lesser importance. The current invention therefore relates to through-coloured sheets which are designed to be unpainted and where the outwardly facing surface is arranged to be visible in their final use.

In one embodiment, the sheets could be referred to as exposed facade cladding, to differentiate from sheets which are arranged to be used underneath the exposed façade cladding. For example, sheets are known which are used under tiles in wet rooms to provide an extra layer of waterproofing, see for example AU 2006/200629 A1. Or in other cases, sheets are known which are used as a temporary façade, after which they are covered by bricks or other exposed façade cladding. In these types of cases, the external appearance of the sheet is not of great importance.

In certain cases, exposed façade cladding sheets could be referred to as a rain screen. It should also be noted that while the sheets of the current invention are suitable for external use, i.e. exposed to rain, wind, snow, etc., the sheets could also be used inside, as interior exposed façade cladding. In other words, the word "exposed" in the term "exposed façade cladding", refers to being visible in the final arrangement, not necessarily exposed to the outside environment. One key distinction between "exposed façade cladding sheets" and other forms of sheets, is that exposed façade cladding sheets should have a uniform and attractive appearance. This is not a requirement, for example, for sheets which will be arranged underneath another surface covering.

It should also be noted that in the current specification, the term fibre cement "sheet" is used as a general term to cover plate like elements made from fibre cement. In the art, fibre cement sheets can also be called plates, boards, tiles, slates, etc. Different sizes will typically have different names. However, it should be clear that the current invention covers all of the typical names, even though the term "sheet" is used uniformly throughout this specification.

### Description of related art

Fibre cement sheets can be produced according to multiple different production processes. In one common production process, green sheets made up of a wet slurry are first partly dried/pre-cured to give them an initial form stability and then cured more in an autoclave. Some examples of known processes to produce the green sheets are known under the names "Hatschek", "Flow on" and "Magnami". As these known processes are well described in the art, the process to produce green sheets will not be described in more detail in this specification. Furthermore, process steps like autoclaving, water proofing, edge finishing, etc. are not described in detail in this specification, as they are well known in the art of manufacturing fibre cement sheets.

During the curing process, the main part of which takes place in the autoclaving operation, calcium salts will typically wander out of the fibre cement material and be left exposed as white deposits on the surface of the fibre cement sheet. This is often called efflorescence. In current production processes, the calcium salt extracts will give the surface of the sheet a non-uniform appearance. For sheets which are not through-coloured, or sheets which are not designed as exposed façade cladding sheets, a non-uniform surface finish can often be accepted, but for through-coloured sheets, or for exposed façade cladding sheets, where the colouring of the surface of the sheet is an important design parameter, a non-uniform surface finish cannot be tolerated. In order to provide a uniform surface finish in the prior art, the autoclaved sheets are therefore sanded in a sanding process where a portion of the outer surface of the sheets is removed along with the efflorescence. Typically, up to around 10% of the original thickness of the sheets is removed in the sanding process.

However, the sanding process has been shown to give different results depending on the wear of the sand paper in the sanding machine. Over time, the sand paper will lose its abrasiveness and it will need to be replaced. It has been found that sheets sanded with a very fresh sandpaper and sheets sanded with a worn sandpaper will have slightly different surface finishes. This will result in sheets with slightly different levels of gloss. When sheets with slight differences in gloss are attached to, for example a building facade, it will appear to a viewer that the sheets have different colours depending on the viewing angle as the amount of light reflecting from the surfaces of the different sheets will be different.

Furthermore, since the sanding is typically done while moving the sheet through a sanding machine, the sanding operation will result in a pattern of longitudinal grooves running down the length of the sheet. In this way, the gloss when looking "along" the sheet will most often be different to the gloss when looking "across" the sheet. Hence, if two neighbouring sheets are mounted on a building façade rotated 90 degrees with respect to each other, the colour of the two neighbouring sheets could appear to be different to a viewer due to the difference in gloss.

### Summary of the invention

It is therefore a first aspect of the current invention to provide a method of manufacturing through-coloured fibre cement sheets, which have a more uniform surface gloss even if they are manufactured at different times.

A second aspect of the current invention is to provide a method of manufacturing through-coloured fibre cement sheets where the gloss measured across the sheet and the gloss measured along the sheet are more uniform.

This aspect is provided at least in part via a method according to claim 1.

It should be noted that during the autoclave procedure, the stack of sheets will be exposed to steam under high pressure and temperature. It is important for the curing operation, that the steam can penetrate all the sheets in the stack since the steam is used to transfer heat into the sheets to cure them faster. It would therefore not be beneficial to apply a solid layer of hydrophobic coating to the sheets prior to stacking them and putting them in the autoclave. It is necessary that the steam can reach the inner portions of the stack of sheets. This would be hindered with a solid layer of hydrophobic coating applied to the sheets prior to stacking. In cases where the sheets are autoclaved individually, a layer of hydrophobic coating would not be detrimental to the curing operation.

It should be noted that in the current specification, the term "anti-sticking agent" is used to describe the substance which is applied to the sheet. The anti-sticking agent has properties which prevent the sheets from sticking together during autoclaving. It is these anti-sticking properties which are important for this application. As a side property, it has surprisingly been found by the inventor, that by applying the anti-sticking agent in a uniform and controlled manner to the surface of the sheet prior to autoclaving the sheet, the efflorescence can be controlled to such a degree that sanding is no longer necessary and the resulting gloss across and along the sheets is much more uniform.

Different anti-sticking agents are available in the art. In some embodiments of the current invention, the anti-sticking agent is Calcium Stearate or similar material. In some embodiments, other stearate salts can be used, for example Alumina Stearate, Zinc Stearate and Sodium Stearate.

It should be noted that calcium stearate is known to be used as a substance which can be mixed with cement prior to curing to avoid efflorescence over time in the cured product. However, according to the prior art, it is necessary for the calcium stearate to be mixed into the wet slurry prior to forming and curing the cement products. In the current invention, the calcium stearate is applied to the surface of the sheet after pre-curing and before starting the autoclaving process. In this way, significantly less calcium stearate is needed.

It can also be noted that calcium stearate has both anti-sticking properties and efflorescence controlling properties. However, it can be imagined that other anti-sticking agents could be found which when applied to the surface of a fibre cement sheet prior to autoclaving, have an effect on the efflorescence, even though they do not as such have specific efflorescence controlling behaviour when mixed into the wet slurry. While not being bound to this theory, it is expected that the hydrophobic properties of the anti-sticking agent limit the water penetration of the surface and thereby allow a smaller transport of salts out of the fibre cement matrix during the autoclaving process. Hence, it is expected that just by covering the surface of a fibre cement sheet with an anti-sticking agent in a uniform and controlled manner, the efflorescence will be affected in a positive way.

In some embodiments, the anti-sticking agent used is a substance which has both anti-sticking properties and efflorescence reducing properties.

According to the current specification, the phrase "in a uniform and controlled manner" should be understood in that the anti-sticking agent is applied in a manner which results in a visually uniform covering of the anti-sticking agent on the surface of the sheet. In contrast, in the prior art, anti-sticking agent is applied in more random manner and then a series of brushes/wipers are used to spread it out over the sheet and to remove excess anti-sticking agent. This results in a non-uniform appearance and covering. Some areas will have a lot of anti-sticking agent and others will have very little or none at all. Likewise, in the prior art method, there will be significant grooves at random locations due to the brushes/wipers. This results in a very non-uniform efflorescence which has to be removed by sanding.

In some embodiments of the current invention, the method further comprises the step of applying a hydrophobic fluid to the outer surface of the sheets after removing the sheets from the autoclave to increase the water repellent properties of the surface of the sheets. In one embodiment, the method further comprises the step of trimming the edges of the sheets after removing the sheets from the autoclave.

In some embodiments of the current invention, the surfaces of the sheets are not sanded after removing them from the autoclave. In some embodiments, the surfaces of the sheets are not sanded prior to shipping the sheets to the end user. In some embodiments, the surfaces of the sheets are sanded but less than 5% of the thickness of the cured green sheet is removed via sanding. In some embodiments, less than 3%, less than 1% or less than 0.5% of the thickness of the sheet is removed via sanding.

In some embodiments, a hydrophobic fluid is applied to a surface of the sheets after removing the sheets from the autoclave to provide a more water repellent surface finish, but without first sanding the surface. In this way, the hydrophobic fluid is applied directly on the un-sanded sheet coming out of the autoclave. In one embodiment, the edges of the sheets are trimmed after removing them from the autoclave but without first sanding the sheets. This is in contrast to prior art through-coloured sheets where the edges will be trimmed after the main surface of the sheets are sanded.

In some embodiments, the step of applying an anti-sticking agent includes applying the anti-sticking agent in a uniform pattern over the entire outwards facing surface of the sheets. It should be noted that it is the uniform pattern which is applied over the entire outwards facing surface of the sheet. It does not mean that the entire outwards facing surface of the sheet is covered by anti-sticking agent. In other words, the uniform pattern could comprise areas which do not contain any anti-sticking agent. By outwards facing surface of the sheets is meant the surface of the sheets which is designed to be outwards facing when the sheet is in the final mounted use position. Typically, one of the surfaces of the sheet will be clearly designed as the outwards facing surface.

In some embodiments, the uniform pattern is arranged such that the anti-sticking agent does not completely cover the outwards facing surface of the sheet. In this way, there is room between the anti-sticking agent for the calcium salts to leave the sheet and be exposed on the surface of the sheet. By applying the anti-sticking agent in a uniform pattern which does not completely cover the sheet, the extracted calcium salts can be controlled to also have a uniform pattern since they will extract in the locations between the anti-sticking agent. In this way, the visual impression formed by the extracted calcium salts is uniform and appealing. Therefore, the calcium salts don't need to be removed with a sanding operation, but can just be left in place. In one embodiment, the anti-sticking agent covers less than 98%, less than 95%, less than 90% or less than 85% of the surface of the sheet.

It has surprisingly been found, that if the anti-sticking agent is arranged to completely cover the entire outwards facing surface of the sheet, it is not possible to prevent the extraction of the calcium salts completely. However, when a complete layer of anti-sticking agent is applied, then it is also difficult to control where the calcium salts will be extracted. Hence, with a complete covering of anti-sticking agent, it is difficult to achieve a visually attractive and uniform calcium salt extraction pattern. Hence, in most cases, it will be beneficial to provide a pattern of anti-sticking agent where the anti-sticking agent does not completely cover the surface of the sheet.

In one possible definition, a uniform pattern is defined as a pattern where the pattern in any random 1cm × 10cm area along the sheet is essentially visually the same as the pattern in any random 1cm × 10cm area across the sheet. By visually the same, is meant that a human viewing the two samples would have the same visual impression of the two areas. In one possible definition, a uniform pattern could be defined as a pattern in which the covered percentage of any 10cm² , 7cm² or 4cm² area is within 20%, 15% or 10% of the covered percentage of any other 10cm² , 7cm² or 4cm² area respectively on the sheet. In another possible definition, a uniform pattern could be defined in that the amount of anti-sticking agent in any 10cm², 7cm² or 4cm² area is within 20%, 15% or 10% of the amount of anti-sticking agent in any other 10cm², 7cm² or 4cm² area respectively on the sheet.

In some embodiments, the uniform pattern could be defined as a pattern in which any 10cm², 7cm² or 4cm² area does not comprise any single uncovered area greater than 2mm², greater than 4mm² or greater than 6mm². It should be understood, that by single uncovered area, it should be understood a single area with a single perimeter. The total amount of uncovered area in the 10cm², 7cm² or 4cm² area could be greater than the specified amounts.

In some embodiments, the anti-sticking agent is applied via a spray nozzle. In some embodiments, the spray nozzle is of the type where the anti-sticking agent is mixed with air to form a mist. In some embodiments, the spray nozzle is an atomizing nozzle. In one embodiment, the spray nozzle is an air-atomizing nozzle. In one embodiment, the vertical distance from the outlet of the spray nozzle to the surface of the sheet is greater than or equal to half of the width of the sheet. In one embodiment, the vertical distance from the outlet of the spray nozzle to the surface of the sheet is greater than 50cm, greater than 60cm or greater than 65 cm.

In some embodiments, the anti-sticking agent is applied to the sheet via a spray nozzle arranged such that the resulting spray pattern from the spray nozzle has a width which is greater than or equal to the width of the sheet. The width of the spray pattern is measured at a distance from the nozzle which is equal to the distance from the nozzle to the sheet.

In some embodiments, the spray nozzle is a flat fan nozzle. In one embodiment, the spray nozzle is arranged to spray the anti-sticking agent as an elongated strip. In some embodiments, the spray nozzle is arranged to have a fan angle of greater than 60 degrees, greater than 70 degrees or greater than 80 degrees.

In some embodiments, the anti-sticking agent is applied to the sheet via a stationary applicator while the sheet is moved past the applicator. In one embodiment, the sheet is moved past a stationary spray nozzle. In one embodiment, the spray width of the nozzle is arranged perpendicular to the axis of displacement of the sheet. In one embodiment, only one applicator is arranged across the width of the sheet, i.e. perpendicular to the axis of displacement of the sheet. In one embodiment, a plurality of applicators are arranged along the axis of displacement of the sheet.

The invention also relates to a finished through-coloured fibre cement sheet which has been autoclaved but not sanded on its outer surface after being removed from the autoclave. In some embodiments, a hydrophobic fluid has been applied to the fibre cement sheet to provide a water repellent surface finish after it has been removed from the autoclave but without first sanding the outer surface. In some embodiments, the edges of the fibre cement sheet have been cut after it has been removed from the autoclave but without sanding the outer surface. In some embodiments, the fibre cement sheet has been sent to the end user without sanding the surface of the fibre cement sheet. In some embodiments, the fibre cement sheet has been removed from the autoclave and mounted on a building without sanding the outwards facing surface of the sheet.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

Figure 1 shows a flow chart illustrating steps in a prior art method for manufacturing through-coloured fibre cement sheets.
Figure 2 shows a flow chart illustrating steps in an embodiment of the method for manufacturing through-coloured fibre cement sheets according to the current invention.
Figure 3 illustrates the surface finish of a through-coloured fibre cement sheet manufactured according to one embodiment of a method according to the current invention.
Figure 4 illustrates the surface finish of a through-coloured fibre cement sheet manufactured according to another embodiment of a method according to the current invention.
Figure 5 illustrates the surface finish of a through-coloured fibre cement sheet manufactured according to a prior art process prior to sanding.
Figure 6 shows a schematic perspective view of one embodiment of a production process for applying the anti-sticking agent to the sheets.
Figure 7 illustrates differences in gloss measured across and along sheets manufactured according to different embodiments of the current inventive method and across and along sheets manufactured according to some prior art methods.

In the following, the invention will be described in greater detail with reference to embodiments shown by the enclosed figures. It should be emphasized that the embodiments shown are used for example purposes only and should not be used to limit the scope of the invention.

### Detailed description of the embodiments

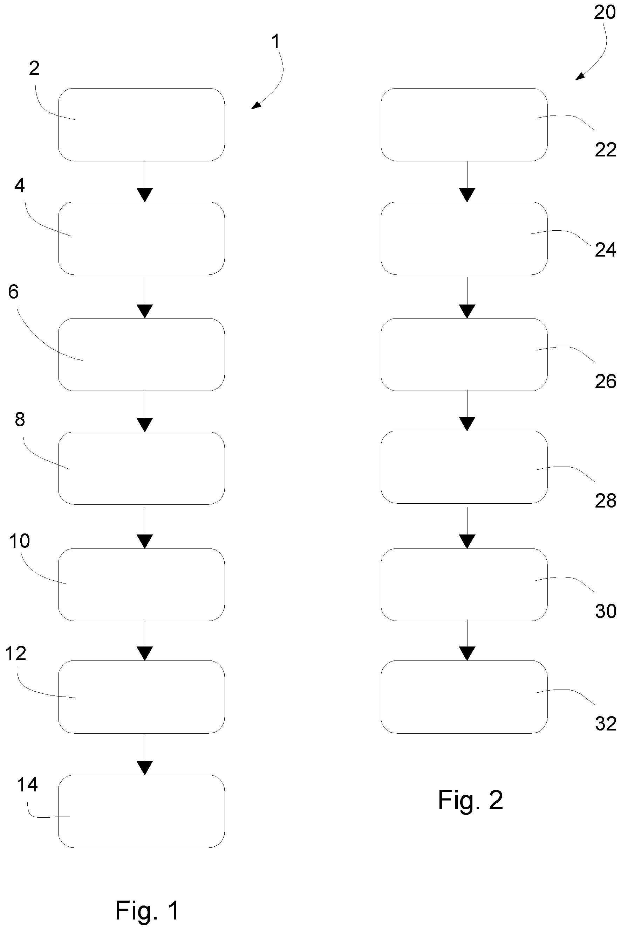

Figure 1 shows a schematic flow chart of a typical prior art method 1 for producing through-coloured fibre cement sheets. The first step 2 is to produce green sheets. The green sheets are produced by mixing a slurry and forming them into sheets and then partially pre-curing them to give them an initial form stability. Different known processes for manufacturing suitable green sheets are mentioned earlier on in this specification. The second step 4 is to apply an anti-sticking agent on a surface of the sheets. One anti-sticking agent used in the prior art is calcium stearate. The third step 6 is to stack the sheets. The fourth step 8 is to put the stack of sheets in an autoclave in which the sheets are cured by exposing the sheets to steam at high temperatures and pressure. It is to be noted that it is necessary to apply the anti-sticking agent prior to stacking the sheets, as the sheets would bond together during the autoclaving operation if an anti-sticking agent were not used. The fifth step 10 is to remove the stack of sheets from the autoclave. The sixth step 12 is to sand the outer surface of the sheets to remove the efflorescence which showed up during the autoclaving procedure. Typically, the thickness of the original sheet is reduced by up to 10% via the sanding operation. The final step 14 is to apply a hydrophobic fluid on the outer surface of the sheets to provide a water repellent surface finish on the sheets. In certain cases, the outer edges of the sheets are cut to provide a uniform edge and a uniform sheet dimension. The step of cutting will typically occur after the sanding. The cutting could occur before or after applying the hydrophobic fluid.

Figure 2 shows one embodiment 20 of the method according to the current invention. In a first step 22, green sheets are produced as known in the art and partly dried/pre-cured to give them form stability. In a second step 24, an anti-sticking agent is applied in a more uniform and controlled manner to the outer surface of the sheets when compared to the prior art method. In a third step 26, green sheets are stacked as in the prior art. In a fourth step 28, the stack of sheets is placed in an autoclave in which the sheets are cured as in the prior art. In a fifth step 30, the sheets are removed from the autoclave. In a sixth step 32, a hydrophobic fluid is applied to the sheets to provide a water repellent surface finish. A hydrophobic fluid is applied to the sheets in this embodiment, however, in other embodiments of the method, a hydrophobic fluid could be avoided if the anti-sticking agent applied prior to the autoclaving procedure provides the autoclaved sheet with satisfactory water repellent properties already.

In contrast to prior art methods, in the new method according to the current invention, the sheets are not sanded after removal from the autoclave. This is due to the fact that by applying the anti-sticking agent in a more uniform and controlled manner to the surface of the sheets, it has been found that the appearance of the efflorescence is controlled in a uniform manner and it is therefore not necessary to remove the efflorescence as it is in the prior art method.

Since the efflorescence does not have to be removed in the method according to the invention, the sheets do not have to be sanded and a number of advantages are thereby realized. The main advantage, as stated above is to reduce potential gloss differences in the sheets. This reduction in gloss difference is relevant both for sheets from different batches, since the wear of the sand paper no longer has an effect on the gloss and for the gloss measurements across and along a single sheet since the sand paper is no longer making grooves along the displacement direction of the sheets.

Another advantage is that the cost of the entire process is reduced since the sanding process is expensive both from a process time cost and a financial cost. Furthermore, by not having to sand, the necessary manufacture thickness of the sheets can be reduced. In the prior art method, typically around 10% of the thickness of the sheet needs to be removed with the sanding process. In contrast, for sheets made with a method according to the current invention, thinner sheets can be made. This results in less material consumption as well as faster turnaround times since less material needs to be added and dried. Furthermore, there is no dust in the process which is usually present in the sanding step. This makes the production process much cleaner. The amount of waste material is also reduced considerably which is a positive feature when seen from a sustainability perspective.

It is also expected that by not sanding the outer surface of the sheets, the surface finish of the outer surface of the sheet will be more robust and stronger when compared to a sheet which has been sanded. By sanding the outer surface, the outer surface will be "opened up" when compared to the un-sanded surface. Likewise, during the sanding process, the fibres of the sheet will be roughened and will be more exposed to the weather. This will cause the sanded sheet to absorb more water than the un-sanded sheet. Absorbing more water, will result in more calcium salts building up on the surface of the sheets over time, as the calcium salts will wander out through the material when the water absorbed in the sheets dries. It is expected that by not sanding the sheets, the outer surface will absorb less water and will experience less calcium salt deposits over time. While not tested over a longer period of time yet, it is also expected that sheets manufactured according to the current invention will experience less warpage, since the two main surfaces of the sheets have more uniform surface properties. In the prior art sheets where one surface was sanded and the other was more closed, the water absorption of the two sides would be different and the drying/expanding behaviour of the two surfaces would be different, leading to additional warpage over time.

The step of applying the anti-sticking agent to the surface of the sheet can be done in a number of different ways. However, it is important for the current invention to work, that the anti-sticking agent is applied in a uniform and controlled manner. The choice of spray nozzle or nozzles, pressure and amount of fluid passing through the nozzle or nozzles will have an effect on the application of the anti-sticking agent.

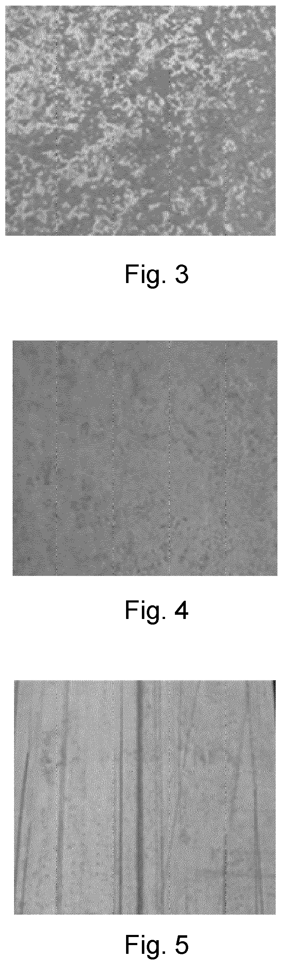

In one embodiment, the surface is coated with an amount of the anti-sticking agent which does not completely cover the entire surface area of the sheet, but still in a uniform manner. In this way, a certain amount of efflorescence will occur on the surface of the sheets during the autoclaving process, but the efflorescence will have a uniform appearance which means it is not necessary to remove it. This is illustrated in figure 3. In another embodiment, a more solid covering of anti-sticking agent is applied where the covering is applied to cover a higher percent of the surface area of the sheets. In this way, the efflorescence is avoided almost completely. This is illustrated in figure 4.

The prior art process where a non-uniform layer of anti-sticking agent is applied is illustrated in figure 5. In figure 5, the white areas are efflorescence and it is clear that the surface needs to be processed before the sheets can be used. The grooves shown in the surface are caused by the prior art process where a non-uniform layer of anti-sticking agent is applied to the surface, and then a wiper at least partially wipes the surface of the sheet to spread the anti-sticking agent around on the sheet. The wipers do not leave a very uniform layer which is shown by the large areas of white deposits and the random "scratches".

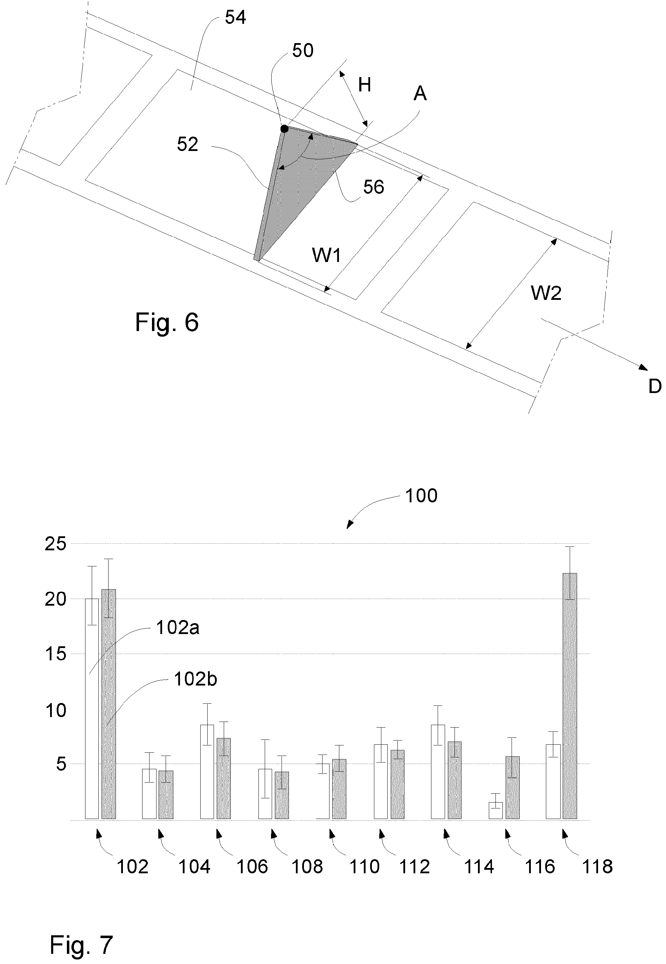

In one embodiment of the method according to the current invention as shown in figure 6, a spray nozzle 50 is used which forms a flat fan shaped pattern 52. The sheets 54 are then passed underneath the spray nozzle at a constant speed. The flat fan shaped pattern is arranged such that the spray width W1 of the fan is arranged perpendicular to the axis of displacement D of the sheet as it passes underneath the spray nozzle. The result is that the fan shaped spray pattern, applies the anti-sticking agent in a strip 56 covering the entire width W2 of the sheet. As the sheet is moved underneath the spray, a uniform layer of anti-sticking agent is therefore applied to the entire surface of the sheet.

It should be noted, that by using a single spray nozzle arranged across the width of the sheet, a uniform spray pattern can be provided without having to coordinate the spray of multiple nozzles. In prior art embodiments, anti-sticking agent is typically applied by multiple nozzles located spaced apart along the width of the sheet. In this way, there will be areas on the sheet where the spray from two nozzles overlap and other areas where there is no overlap. Hence, the application of the anti-sticking agent would be non-uniform. In the prior art, the nozzles are placed closer to the sheet which allows the spray apparatus to be reduced in size. However, this requires multiple nozzles side by side.

In the embodiment shown in figure 6, the nozzle is formed with a spread angle A of around 85 degrees. In this case, the nozzle should be located at a vertical offset H from the surface of the sheet, the vertical offset being greater than half of the width W2 of the sheet. In this way, the spray fan will overlap the width of the sheet and a uniform layer of anti-sticking agent will be applied. In one embodiment, a sheet size of 1280x3080 is produced. In this embodiment, the nozzle is placed around 70cm above the sheet as it passes the nozzle.

In an embodiment currently used by the applicant, the nozzle is of the air-jet type where air is mixed with the anti-sticking agent fluid prior to being ejected from the nozzle. In this way, the anti-sticking agent forms droplets with a more airy character and results in a more uniform pattern on the sheet. The specific nozzle used by the applicant at the current time, comprises two air openings upstream of the nozzle outlet. Air is therefore sucked in via these two openings as the fluid streams through the nozzle. A small mesh filter is placed in the fluid stream downstream of the openings to ensure mixing of the air and the fluid. However, it should be clear that other forms of nozzle are available which would also be suitable for this application.

At the time of writing this specification, the applicant was using an anti-sticking agent which was mixture of 2.5% Calcium Stearate and 97.5% water. When the fluid reaches the surface of the sheet, the water will evaporate, leaving a uniform covering of the calcium stearate on the surface of the sheet.

Figure 7 illustrates gloss measurements 100 of different sheets produced according to different methods. The Y-axis in the figure shows gloss units (GU) measured at 85 degrees, the higher the number, the higher the gloss. According to practical experience, differences in gloss will be visible to a human eye when the difference is greater than 5 GU. Some people will also see differences at 3 GU.

The first seven measurements 102, 104, 106, 108, 110, 112, 114 show sheets manufactured according to embodiments of the method of to the current invention whereas the last two measurements show sheets 116, 118 manufactured via prior art processes. The first seven sheets have different amounts of anti-sticking agent applied and with slightly different patterns. However, they all have anti-sticking agent applied in a uniform and controlled manner. The two measurements for each sheet are the gloss measurements taken at 85 degrees to the sheet, first measured 102a across the sheet and then 102b along the sheet respectively. As can be seen, the differences in the gloss measurements across and along the sheet are much smaller for the sheets 102, 104, 106, 108, 110, 112, 114 manufactured according to the method of the current invention when compared to the sheets 116, 118 manufactured according to the prior art method. Furthermore, the differences in the sheets manufactured according to the method of the current invention have a gloss difference of less than 3 GU, which will be invisible to most human eyes. Likewise, the sheets manufactured according to the prior art methods typically have a gloss difference of greater than 5 GU, which will be visible to most human eyes.

In the above mentioned embodiments, a single spray nozzle arranged above the surface of the sheet was used. In other embodiments, other forms of applicators could be imagined. In one embodiment (not shown), a controlled mist could be established in a closed room and the sheet passed through the mist to apply a uniform coating of the agent to the surface of the sheet. In another embodiment (not shown) an ink jet printer like print nozzle could be used which was moved across the sheet similar to a very large ink jet printer. This would allow a very well defined pattern to be applied to the sheet. Other forms of applicators could be imagined and provided by the person skilled in the art to apply a uniform pattern on the surface of the sheet.

It is to be noted that the figures and the above description have shown the example embodiments in a simple and schematic manner. Many of the specific mechanical details have not been shown since the person skilled in the art should be familiar with these details and they would just unnecessarily complicate this description.

## Claims

1. A method of manufacturing unpainted through-coloured fibre cement sheets comprising the steps of:
a. producing a plurality of through-coloured green sheets,
b. applying an anti-sticking agent to an outer surface of each of the green sheets in a uniform and controlled manner,
c. forming a stack of green sheets with the anti-sticking agent on the outer surface of each sheet,
d. putting the stack of green sheets in an autoclave,
e. waiting until the sheets are cured to a desired level, and
f. removing the sheets from the autoclave.

2. A method according to claim 1, **characterized in that** the surfaces of the sheets are not sanded after removing them from the autoclave or **in that** the surfaces of the sheets are sanded but less than 5% of the thickness of the cured green sheet is removed via sanding.

3. A method according to claim 1 or 2, **characterized in that** a hydrophobic fluid is applied to a surface of the sheets after removing the sheets from the autoclave, but without first sanding the surface.

4. A method according to any one of claims 1 to 3, **characterized in that** the step of applying an anti-sticking agent includes applying the anti-sticking agent in a uniform pattern over the entire outwards facing surface of the sheets.

5. A method according to claim 4, **characterized in that** a uniform pattern is defined as a pattern in which the covered percentage of any 10cm² area is within 20% of the covered percentage of any other 10cm² area respectively on the sheet.

6. A method according to any one of claims 1 to 5, **characterized in that** the surface is coated with an amount of the anti-sticking agent which does not completely cover the outer surface of the sheet.

7. A method according to claim 6, **characterized in that** the anti-sticking agent covers less than 98% of the outer surface of the sheet.

8. A method according to any one of claims 1 to 7, **characterized in that** the anti-sticking agent is applied via a spray nozzle.

9. A method according to claim 8, **characterized in that** the anti-sticking agent is applied to the sheet via a spray nozzle arranged such that the resulting spray pattern has a width which is greater than or equal to the width of the sheet.

10. A method according to claim 9, **characterized in that** the spray nozzle is a flat fan nozzle.

11. A method according to any one of claims 1 to 10, **characterized in that** the anti-sticking agent is applied to the sheet via a stationary applicator while the sheet is moved past the applicator.

12. A method according to any one of claims 1 to 11, **characterized in that** the anti-sticking agent is Calcium Stearate, another stearate salt or another similar substance.

13. An unpainted through-coloured fibre-cement sheet which has been autoclaved but not sanded on its outer surface after being removed from the autoclave.
